# EUROPEAN PATENT SPECIFICATION

(11) **EP 1 627 041 B1**
(45) Date of publication and mention of the grant of the patent: **18.11.2009**
(21) Application number: 04752683.5
(22) Date of filing: 19.05.2004
(51) Int. Cl.: C12M 3/00, B01D 46/10, B01D 53/22, A61L 9/01

(54) **METHOD AND APPARATUSES FOR GAS SEPARATION**
VERFAHREN UND VORRICHTUNG ZUR GASTRENNUNG
PROCEDE ET APPAREIL DE SEPARATION DE GAZ

(43) Date of publication of application: 22.02.2006
(73) Proprietor: Trachtenberg, Michael, Lawrenceville, NJ 08645 (US)
(72) Inventor: Trachtenberg, Michael, Lawrenceville, NJ 08645 (US)
(74) Representative: Gill, David Alan
(86) International application number: PCT/US2004/015706
(87) International publication number: WO 2004/104160

(56) References cited:
- EP-A- 0 514 021
- DE-A- 1 769 800
- US-A- 3 910 780
- US-A- 4 602 987
- US-A- 4 750 918
- US-A- 5 164 081
- US-A- 6 143 556
- US-A- 6 153 097
- US-A- 6 156 096

## Description

### 1. FIELD

This invention relates to a method, and an apparatus employing a phase-conversion membrane to facilitate mass transport of a substance from a first phase to a second phase thereby purifying the substance. More specifically, the invention relates to a method, and apparatus employing a phase-conversion membrane comprising an enzymatic catalyst to facilitate selective transport of a desired component gas from a gas phase to a solution phase thereby isolating the desired component gas.

### 2. BACKGROUND

Traditional techniques to separate and isolate components from mixed or gas steam include those based on the differing physical or chemical properties of the stream's components. For example, certain chemical separation techniques involve treatment of the fluid stream with chemicals such as amines, iron sponge, etc. Physical separation techniques include immiscible liquid-liquid extraction, cryogenic techniques, and gas-liquid and gas-solid sorptive techniques (e.g. pressure swing adsorption). Unfortunately, such techniques do not readily allow separation of stream components having similar physical or chemical properties. A further disadvantage is that such techniques generally are not useful to isolate gases that are present in low concentrations in the mixed stream.

Gas streams can also be separated by surface tension using spray towers, waterfall towers and gas-injection towers. But because of surface-tension effects, the fluid assumes a spherical shape and coalesces. The coalescing adversely affects surface-to-volume ratio and necessitates greater overall contact volume and contact time for separation. A further disadvantage is that the fluid streams can foam and exhibit channeling as they move through the reactor, further reducing reactor efficiency.

Other traditional separation techniques involve selective mass transport through inert membranes. A. S. Michaels, New Vistas For Membrane Technology, 19 CHEMTECH 160-172 (1989); R. E. Babcock et al., Natural Gas Cleanup: A Comparison of Membrane and Amine Treatment Processes, 8 ENERGY PROG. 135-142 (1988). Newer technologies focus on inert semi-permeable membranes. R. W. Spillman, Economics of Gas Separation Membranes, 85 CHEM. ENGR. PROG. 41-62 (1989).

In partition reactors, the discrete phases -gas and gas, gas and liquid and liquid and liquid- are commonly separated by a separation membrane. The separation membrane is generally a mechanical partition, such as a polymer or metal material. The separation membrane commonly has properties such as solution diffusion parameters of pore size and shape so that it acts as a selective filter. Unfortunately, conventional membrane systems generally cannot achieve complete separation. R. W. Spillman, Economics of Gas Separation Membranes, 85 CHEM. ENGR. PROG. 41-62 (1989).

Partition-type reactors can also be designed that use hollow fibers to effect separation based on relative fluid volatilities using hollow fibers. Such hollow fibers can be nonporous or microporous. For example, Jensvold, U.S. Patent No. 6,153,097, discloses a hollow fiber reactor featuring an internally staged permeator wherein the permeate, derived from the bore-side feed of a first tube set, if not captured directly, serves as the shell-side feed to a second tube set.

In partition reactors employing hollow fibers, the fibers can have a wide variety of orientations and relationships. For example, the fibers can have parallel, orthogonal, concentric, or radial orientations. The hollow fibers can be formed into fiber mats or wafers, wherein the fibers can be oriented at any of a number of angles and array patterns. Hollow fiber processes are generally applied to separate fluid streams where all the components are gases. J. Jensvold, U.S. Patent No. 6,153,097 (issued Nov. 28, 2000); R. Nichols et al. in U.S. Patent No. 5,164,081 (issued Nov. 17, 1992).

The traditional gas-separation techniques described above commonly exhibit one or more of the following problems: they are energy inefficient, only moderately specific, and slow (particularly in the desorption phase). They are only effective on a relatively pure feedstock, depend on a significant pressure head, and, in many cases, they employ environmentally harmful or toxic substances.

The requirement for a relatively-pure-feedstock is one of the most prevalent and difficult problems. For example, often, certain of the stream's component gases are desirable for certain end uses. Where cost-efficient separation requires an enriched feedstock use of the techniques discussed above results in a geographical restriction to available feed sources where such component is present in higher concentration in more pure feed sources. These feed-source locations may be distant from the end-use location. Consequently, the costs of transporting the desired purified component after separation may be prohibitively high.

Biological catalysts (e. g. , enzymes) present several advantages when used in separation technologies including enhanced efficiency, speed, and selectivity. Further, they are environmentally friendly and biodegradable and can be used at moderate temperatures and pressures, enhancing safety. There are reports describing the use of carbonic anhydrase to convert carbon dioxide in aqueous solution to bicarbonate. But use of such enzymatic processes to commercially isolate gases from mixed streams is impractical because of the low surface-to-volume ratios and low gas-liquid contact surface areas in the currently known processes.

Prior use of enzymes has focused very largely on the food processing industry, cleansing or detergent applications, or processing of sewage.Industrial applications in the gas field have been limited. Prior application of enzymes to gas extraction are found in patents to Bonaventura et al, U. S. Patents 4,761, 209 and 4,602, 987 and Henley and Chang U. S. Patent 3,910, 780. Bonaventura uses membranes impregnated with carbonic anhydrase to facilitate transport of carbon dioxide across a membrane into water in an underwater re-breathing apparatus.

US Patent 6,143,556 discloses a method and apparatus for removing and concentrating a gaseous component from a gas mixture by contact with a membrane containing a liquid absorbent and an immobilised enzyme.

Despite some significant advantages, a variety of problems have limited the application of enzymes in industrial settings. These include short lifetime of either free or immobilized enzyme, fouling and biofouling, separation of the enzyme from the immobilization surface, limited availability of enzymes in sufficient quantity, and expense of manufacture. These problems have resulted in relatively few efforts to use enzymes for manipulation of gases. Further, physical/chemical means are in place commercially; they are understood and represent established technology and significant investment.

Accordingly there is a need for improved methods, apparatuses and reactors that provide efficient fluid separation or enrichment and are environmentally friendly, selective, and can isolate components present in low concentrations from relatively impure feed stocks.

### 3. SUMMARY

According to the present invention there is provided a method as claimed in Claim 1, and an apparatus as claimed in Claim 10.

In the invention, the feed stream can be any mixture of gases such as air, flue gas or other combustion source, or natural gas so long as the desired gas to be separated is selectively absorbed, chemically converted, or otherwise rendered more soluble in the phase-conversion membrane than are the other components.

In one embodiment, the invention can be directed to a method, and apparatuse useful for separating a desired component gas from a mixed feed stream by subjecting the mixed stream to: (a) a partition membrane to effect a first-stage separation (b) a second-stage purification by way of a phase-conversion membrane to isolate the desired component gas from the other components by converting it to a different phase, for example, a solution phase, while the other non-desired gas components remain in the gas phase, (c) a desorption step, where the desired component gas is released from the second phase in purified form, and (d) a second partition membrane, after which the purified gas is collected or subjected to further manipulations. When microporous hollow fibers are used their purpose is to separate liquids from gases.

The term phase conversion as used herein includes a conversion of gas to a ionized compound or salt dissolved in a liquid.

This cycle can be repeated one or more times depending on the composition and purity of the feed stream, the physical and chemical properties of the desired component gas, the required purity level of the desired component gas, the type and composition of the partition membrane, and the type and composition of the phase-conversion membrane. The first and second partition membranes are separated by a confined space filled with the phase-conversion membrane.

The membrane/catalyst system, isolates the desired component gas from the mixed stream by reacting with it to enhance its solubility it in a liquid phase. In a further aspect of this embodiment, the component isolated in the liquid phase is converted back to the gas phase in purified form.

In another embodiment, the invention is useful to isolate and purify carbon dioxide from a mixed component stream utilizing carbonic anhydrase as the phase-conversion catalyst in a phase-conversion membrane.

In another embodiment, the invention is useful to process very large volumes of gas for carbon dioxide removal, with economic efficiency not heretofore possible with conventional chemical processing.

In another embodiment, the invention is useful to enrich or remove carbon dioxide from the ambient atmosphere in which the carbon dioxide is in low concentration; about 0.035 per cent by volume.

### 4. BRIEF DESCRIPTION OF THE FIGURES

These and other features, aspects, and advantages of the present invention will become better understood with regard to the following description, appended claims, and accompanying figures where:
Fig. 1 illustrates an X-Y-Z arrangement reactor using woven hollow fiber mats.
Fig. 2 illustrates the organization and orientation of hollow fiber arrays as may be used in a flat array. Fig. 2A illustrates a single woven fiber mat. Fig. 2B illustrates said mats in parallel or X-X' array. Fig. 2C illustrates arrangement of said mats in orthogonal or X-Y array.
Fig. 3 illustrates varying the ratio of feed to sweep fibers. Fig. 3A illustrates a 1:1 ratio. Fig. 3B illustrates a 1:2 ratio.
Fig. 4 illustrates a concentric fiber arrangement.
Fig. 5 illustrates a method for constructing a spiral wound array of a feed, sweep and phase-conversion membrane passages using membrane sleeves. Fig. 5A illustrates manufacture of the sleeve array. Fig. 5B illustrates the alignment of the sleeves and spacers prior to spiral wind.
Fig. 6 illustrates an end view of the spiral wind of a sleeve membrane. This representation is also applicable to the spiral wind in Figs. 5 and 8.
Fig. 7 illustrates the casing for a spiral wound reactor.
Fig. 8 an embodiment having spiral wound passages using hollow fibers oriented at right angles (radially and circumferentially) and a schematic view further illustrating the passages.
Fig. 9 shows the first step in assembling the apparatus of Fig. 8.
Fig. 10 illustrates an alternately striped membraneless reactor.
Fig. 11 illustrates a rectilinear membraneless absorber where the fluid flow rests on a surface.
Fig. 12 illustrates a rectilinear membraneless absorber where the fluid flows align along a wall to maximize interfacial area.
Fig. 13 illustrates a rectilinear membraneless reactor where the fluid flow rests on no surface but uses filamentous or lateral guides.
Fig. 14 illustrates a membraneless absorber in which the phase-conversion membrane is dispensed via centrally located concentric hollow tube while the feed gas or sweep gases are released on either side of the phase-conversion membrane.
Fig. 15 illustrates a membraneless reactor in which the phase-conversion membrane is dispensed via centrally located concentric hollow tube while the feed gas and sweep gases are released on either side of the phase-conversion membrane.

It is to be understood that these drawings are intended to illustrate the concepts of the invention and are not to scale.

### 5. DETAILED DESCRIPTION

Gases are defined as materials that are in the gas phase at ambient temperature and pressure (taken to be 20°C and one atmosphere). The operating temperature for these systems is commonly 4°C-140°C, thus water vapor is a gas at <100°C if a vacuum is used. Suitable gases include, but are not limited to, nitrogen, carbon dioxide, carbon monoxide, sulfur dioxide, methane, ammonia, hydrogen sulfide and water vapor.

The mixed gas stream can be pretreated to provide an optimal temperature or pressure, or to remove components that would lower the reactor's efficiency. Examples of pretreatment include mechanical screening by filters chemical screening by adsorbents or absorbents scrubbing the use of heat exchangers waste-heat-recovery processing compression expansion and other gas-processing steps known in the art.

### 5.1 THE PARTITION MEMBRANE

In one embodiment of the methods, apparatuses, and reactors of the invention, the partition membrane effects a first-stage purification of the desired gas component based on physical characteristics, such as solubility, diffusivity, conductivity, magnetic properties

Partition membranes for use in the invention can be homogenous, composite, symmetric, or asymmetric membranes, as described in U.S. Pat. No. 4,874,401.

The partition membrane can be made from a polymer, a metal, a ceramic or other material well known in the art. The partition membrane can be non-porous, nanoporous or microporous. Suitable partition membranes for use in the invention are disclosed in R. E. KESTING, SYNTHETIC POLYMERIC MEMBRANES, 2nd ed. (1985); SUN-TAK HWANG & KARL KAMMERMEYER, MEMBRANES IN SEPARATION (1984).

Preferably, the partition membrane exhibits a high contact angle with the phase-conversion membrane. This prevents the phase-conversion membrane from clogging the pores of the partition membrane, if any, and thus allows for a high gas-diffusion rate through the partition membrane. Preferably, if the phase-conversion membrane comprises a hydrophilic substance, such as an aqueous solution, then the partition membrane is preferably composed of a hydrophobic material. This combination prevents bulk water or other hydrophilic liquid from entering the partition membrane's pores. Conversely, if the phase-conversion membrane is hydrophobic, the partition membrane material should be hydrophilic material, again ensuring that the liquid does not enter the partition membrane's pores.

### 5.1.1 Hollow Fibers For Use In Partition Membranes

In one embodiment, the partition membrane comprises hollow fibers such as those disclosed in J. Jensvold, U.S. Patent No. 6,153,097 (issued Nov. 28, 2000).

Hollow-fibers useful in partition membranes of the invention can be constructed of any porous material or semi-permeable polymeric material, preferably, olefinic polymers, such as poly-4-methylpentene, polyethylene, and polypropylene; polytetrafluoroethylene; cellulosic esters, cellulose ethers, and regenerated cellulose; polyamides; polyetherketones and polyetheretherketones; polyestercarbonates; polycarbonates, including ring substituted versions of bisphenol based polycarbonates; polystyrenes; polysulfones; polyimides; and polyethersulfone. In preferred embodiments the passage walls are made of hydrophilic porous material, hydrophobic porous material, ceramic porous material, sintered metal porous material, carbon nanotubes, porous polypropylene, porous polyperfluroethylene, porous hydrocarbon polymers, porous polyamides and porous polycarbonates, preferably, the passage walls are made of Celgard brand polypropylene. Celgard is a polypropylene material. The X30-240 material preferred has a porosity of 40% with pores of 30 nm. Other variants are available. Other manufacturers produce related product using the same or other polymers.

In a preferred embodiment, the outer diameter of the hollow fibers ranges of about 100 to about 500 micrometers, preferably of about 100 micrometers to about 300 micrometers. Preferably, the bore diameter is 10 to 300 micrometers most preferably 150-250 micrometers.

As used herein, hollow fiber means an enclosed volume and is not limited to traditional cylindrical geometry. Rather, it is possible to use flat membranes that are arranged analogously to sealed envelopes such that they are oblate with any desired ratio of primary to secondary axis. Nichols et al in U. S. Patent 5,164,081 illustrate the manufacture of sleeves by inserting a spacer between the folded layers and sealing around the edges. Sealing can be accomplished by heat to weld the faces or by use of a glue, preferably an epoxy. As practiced here, unlike Nichols, one or more selectively perforated tubes are inserted into the sleeves to allow delivery of a fluid into the center of the sleeve, a space akin to the bore of a hollow fiber. By use of two such tubes a fluid is delivered to one end of a sleeve, in one example acting as the feed gas while a tube at the opposite end of the sleeve capture the gas that has not been selectively extracted across the sleeve surface now constituting the retentate gas.

In another aspect, the hollow fiber surface can be partially coated with a conducting material retaining its porosity but being able to carry a charge. In a preferred embodiment the conducting material is deposited on the membrane surface by vapor deposition. In another embodiment the membrane material itself is electrically conducting examples of which include polyacetylene and poly(para phenylene vinylene) (PPV) and other as described by T. A. Skotheim in Handbook of Conducting Polymers, 1986.

In still a further aspect, the hollow fiber surface can be functionalized to accept covalent or other types of bonding with materials that can act as a bridge to yet other materials, here, for example an enzyme. S. Nishiyama, A. Goto, K. Saito, K. Sugita, M. Tamada, T. Sugo, T. Funami, Y. Goda, and S. Fujimoto describe such a procedure in their paper "Concentration of 17-Estradiol Using an Immunoaffinity Porous Hollow-Fiber Membrane" Anal. Chem., 74 (19), 4933 -4936, 2002**.** An epoxy-group-containing monomer, glycidyl methacrylate was graft-polymerized onto a porous hollow-fiber membrane. The enzyme, as a ligand, was coupled with the epoxy group on the membrane coating.

As an additional example, the activated functionalized surface can be coated with silica gel, for example, the thin film gel disclosed in Eva M. Wong et al., Preparation of Quaternary Ammonium Organosilane Functionalized Mesoporous Thin Films, 18 LANGMUIR, 972 -974 (2002). It in turn having a desired series of properties such as select pore diameter and pore group functionalization, for example, with acidic or basic groups.

### 5.1.1.1 Correction Of Hollow-Fiber Partition Membranes From Hollow Fibers

Hollow-fiber partition membranes are well known in the art, for example, see U.S. Pat. No. 4,961,760. In a preferred embodiment, the hollow fibers are of controlled porosity and composition, preferably, having a hydrophobic surface and having pore sizes such that surface tension prevents the flow of the phase-conversion membrane through the pores.

In one embodiment, the hollow-fiber partition membranes have a dense discriminating region wherein the separation of the fluid mixture is based on differences in solubility and diffusivity of the fluids. W.J. Koros & G.K. Fleming, Membrane-based gas separation, 83 JOURNAL OF MEMBRANE SCIENCE 1-80 (1993).

In another embodiment, the hollow-fiber partition membranes are microporous, wherein the separation is based on relative gas volatilities.

In one preferred embodiment, the membranes are asymmetric hollow fibers as described in U.S. Pat. No. 4,955,993.

In another preferred embodiment, the partition membrane is a matrix or array of hollow fibers, wherein a plurality of hollow fibers are bound together with a binding material or woven together in sheets or mats such as those disclosed in J. Jensvold, U.S. Patent No. 6,153,097 (issued Nov. 28, 2000). Such sheets or mats are referred to herein as hollow-fiber partition membrane sheets (or simply hollow fiber sheets). As explained in more detail below, when stacked, the hollow-fiber partition membrane sheets are spaced apart by being woven one over the other with a binding material.

Preferably, the hollow fibers that make up the sheet are arranged in a substantially non-random organized manner. Preferably, the hollow fibers in the sheet are arranged in either a parallel wrap fashion, wherein the hollow fibers lie substantially parallel to one another with each end of the hollow fibers found at either end of the sheet. In an alternative embodiment, the hollow fibers in the hollow fiber sheet are wrapped in a bias wrap fashion, wherein the hollow fibers are wrapped in a crisscross pattern at a set angle, thus holding the hollow fibers in place in a sheet. In preferred hollow-fiber sheets, the sheet thickness is as thick as one hollow fiber.

The sheet can be in any appropriate geometric shape, such as circular, square, or rectangular. Preferably, the sheet is square or rectangular and arranged in a manner such that the ends of the hollow-fibers are located at either end of the sheet.

### 5.2 THE PHASE-CONVERSION MEMBRANE

The phase conversion membrane selectively absorbs the desired gas component and coverts it into a second phase.

In the invention, the phase-conversion membrane is water or an aqueous solution.

Suitable phase-conversion membranes for use in the invention are disclosed in R. E. KBSTTNG, SYNTHETIC POLYMERIC MEMBRANES, 2nd ed. (1985); SUN-TAK HWANG & KART KAMMERMEYER, MEMBRANES IN SEPARATION (1984).

During use, the phase-conversion membrane can be stirred or a flow introduced by a stirrer, pump or other conventional means. Flow or other means is applied to maintain a concentration or other gradient to produce vectorial movement of the desired component gas into a second phase.

Preferably, the thickness of the phase-conversion membrane ranges of from about 10 micrometers to about 600 micrometers, more preferably, of from about 10 micrometers to about 200 micrometers.

In the invention, the phase-conversion membrane chemically converts the gas to an ionic species soluble in an aqueous medium by way of a phase-conversion catalyst, preferably, an enzyme.

Preferably, the phase-conversion membrane is a phosphate, a bicarbonate-glycine or a bicarbonate-piperazine buffer whose ionic strength has been adjusted to compensate for the pH change that would occur in the absence of the buffer. The buffer fluid contains a phase-conversion catalyst comprising an enzyme, and more preferably, carbonic anhydrase.

Preferably, the aqueous solution comprises a metal carbonate or metal bicarbonate or a zwitterionic material such as an amino acid, in a pH range facilitating the enzymatic conversion of a gas, such as carbon dioxide, to a soluble species such as bicarbonate. In another aspect of this embodiment, the solubilized bicarbonate is converted back into purified carbon dioxide at the permeate face or in a second striping reactor body.

A carbonate-bicarbonate system forms spontaneously in the presence of water, catalyst, and carbon dioxide. The total carbonate concentration is a function of the feed gas carbon dioxide concentration while the ratio of carbon dioxide/hydrogen carbonate/carbonate is a function of the solution pH. Reactions of this type have been examined by G. ASTARITA ET AL., GAS TREATING WITH CHEMICAL SOLVENTS (1983).

A liquid phase-conversion membrane is manufactured as a bulk solution consisting of the appropriate salts and buffers. In the case of a homogeneous catalyst, the catalyst, preferably an enzyme, is added to the bulk solution to the preferred concentration.

In the case of the presence of phase separation membranes the bulk fluid is delivered to the multimicrometer thick space between the phase separation membranes to form a thin, contained liquid membrane.

### 5.3 PHASE-CONVERSION CATALYSTS

In one embodiment, the phase-conversion membrane comprises a phase-conversion catalyst that facilitates adsorption, absorption, or chemically converts the desired component gas into a condensed phase. Preferably, the phase conversion catalyst converts the desired component gas into a species absorbable or soluble in the phase-conversion membrane. Any catalyst that facilitates absorption, adsorption, or dissolution into a condensed or second phase can be used as a phase-conversion catalyst. As noted the phase-conversion catalysts convert the gas into an ionic species that is soluble in an aqueous medium.

Examples of phase-conversion catalysts suitable for use in the invention are presented in Table I below. Also presented in Table I, corresponding to each catalyst, are non-limiting examples of a desired component gas for which each catalyst is suitable, the resulting chemical species soluble or otherwise retainable in the second phase, and non-limiting examples of substances suitable for the second phase.

**TABLE I: Phase-Conversion Catalysts**

| Phase-conversion catalyst |
|---|
| Carbonic anhydrase |
| glucose oxidase |
| aldehyde oxidase |
| hydroxylamine oxidase |
| sulfite oxidase |
| sulfur-ferric ion oxidoreductase |
| catechol oxidase (dimerizing) |
| laccase |
| L-ascorbate oxidas |
| catalase |
| sulfur dioxygenase |
| superoxide dismutase |
| B galactosidase |
| urease |
| lactic acid oxygenase |
| inositol oxygenase |
| lysine oxygenase |
| octane oxygenase |
| pyrocatechase |
| 3-hydroxyanthranilate oxygenase |
| tryptophan oxygenase |
| homogentisate oxygenase |
| formate dehydrogenase/NADH |
| formate dehydrogenase (cytochrome)/ferricytochrome b₁ |
| carbon monoxide-methylene blue oxidoreductase/methylene blue |
| carbon monoxide dehydrogenase/methyl viologen |
| nitrate reductase (NADH)/NADH |
| nitrate reductase NAD(P)H/(NAD(P)H) |
| nitrate reductase NADPH/(NADPH) |
| superoxide-forming enzyme /NADPH |
| nitrite reductase (cytochrome)/ferricytochrome c |
| ferredoxin-nitrate hydroxylamine reductase / ferredoxin pyocyanine; methylene blue flavins |
| nitric-oxide reductase/pyocyanine |
| nitrite reductase/pyocyanine; flavins |
| nitrite reductase/benzyl viologen |
| sulfite reductase (NADPH)/NADP |
| sulfite reductase (ferredoxin)/ferredoxin |
| sulfite reductase/methyl viologen |
| adenyl sulfate reductase/ methyl viologen |
| cytochrome c oxidase/ferrocytochrome |
| Pseudomonas cytochrome c oxidase/ferrocytochrome |
| nitrate reductase/ferrocytochrome |
| methane monoxygenase/NAD(P)H |
| nitrogenase/ ferredoxin + ATP |
| carbamoyl-phosphate synthetase/ATP |

### 5.4 DESORPTION OF THE DESIRED COMPONENT GAS FROM THE SECOND PHASE IN PURIFIED FORM

In a desorption step, the isolated component is removed from the second phase by conversion back into a gas, now in highly purified form. Desorption of the desired component from the second phase depends on the relationships of various physical properties of the second phase and component. Desorption can be facilitated, for example, by change in pressure, temperature, pH or other physical or chemical means such that the extracted component dissociates from the chemical reactant, dissociated from a chelator or chaperone or is now less soluble in the liquid or is can move to a lower energy state.

### 5.5 APPARATUSES & REACTORS OF THE INVENTION EMPLOYING PARTITION MEMBRANE SHEETS ARRANGED IN A STACKED STRUCTURE HAVING A PHASE-CONVERSION MEMBRANE BETWEEN PARTITION MEMBRANE SHEETS

In one embodiment, the invention is directed to a stacked-sheet partition-membrane reactor, wherein the partition membranes (e.g., hollow-fiber partition membrane sheets) can be arranged in a stacked manner with a phase-conversion membrane sandwiched between the partition membrane sheets. Thus, in its simplest form, the reactor comprises two partition membrane sheets having a phase-conversion membrane between them. A spacer of known dimension provides uniform separation between the sheets defining the space for containing the phase-conversion membrane. The space can be of any dimension, the only constraints being that it does not permit the feed partition membrane and the sweep partition membrane to contact each other in the stacked arrangement, that control is exercised for flow resistance, and that the enclosed volume is not so great as to constitute a significant lake. The object is to achieve minimal residence time of the desired component gas in the reactor yet sufficient to maximize exchange of the desired component gas across the phase-conversion membrane. Typical thickness of the phase-conversion membrane ranges of from about 10 micrometers to about 600 micrometers, preferably, of from about 10 micrometers to about 200 micrometers.

In the stacked-sheet partition-membrane reactor design, one or more of the partition-membrane sheets will serve as a gas inlet, for bore side introduction of the mixed gas stream and one or more of the sheets will serve as the sweep sheet to sweep out the purified gas. But multiple partition membrane sheets can be used and there need not be a 1:1 ratio between the sheets used feeds and the sheets used as sweeps.

The ratio of total surface area of each sheet and the phase-conversion membrane to thickness is a function of the relative rates of absorption and desorption.

In one embodiment, the phase-conversion membrane is static. Where the phase-conversion membrane is static, the flow rate for the fluid equals zero, and the absorption of the desired gas component is diffusion-based. Increased flow of the phase-conversion membrane results in improvements in permeance, in some cases, in excess of 10-fold. In another embodiment, the phase-conversion membrane flows between the sheets to promote even distribution during operation. The phase-conversion membrane can be driven between the partition membrane sheets in any direction in the plane of the sheets or perpendicular to the sheets. For example, when the partition membrane sheet is a hollow-fiber partition membrane sheet, the flow direction of the phase-conversion membrane can be parallel to the sheet's hollow fibers or orthogonal to them or any angle between. Thus, the phase-conversion-membrane flow can be in the Z direction or X' or Y' directions or any angle between. If the phase-conversion membrane is flowing in the Z direction, its axis preferably is of from about 0° to about 90°, though a preferred angle is about 67° relative to the Z-axis.

In another preferred embodiment, the phase-conversion membrane flows at sufficient velocity to provide turbulent mixing at the boundary layers and interface where the phase-conversion membrane contacts the gas stream. The preferred velocity of the phase-conversion membrane is taken in relationship to the feed-gas concentration or partial pressure.

The key concept of reactors and apparatuses of the invention is to provide effective contact and mixing of the gas streams with the phase-conversion membrane, preferably, with control of the phase-conversion membrane's thickness and, thereafter, if desired, providing a sweep gas to transfer the mixed gas stream from the feed partition membrane to the phase-conversion membrane and then from the phase-conversion membrane to the sweep partition membrane.

The flow directions of gas streams are not critical but is governed by a tradeoff between the preferred geometry and extraction efficiency. Economic and manufacturing considerations will play a major role is the tradeoff decision. For example, a cross-current can be used in both the feed partition membrane and the sweep partition membrane and the phase-conversion membrane can be baffled so that it flows across the shell many times.

The separation can be further improved by adjusting conditions of catalyst concentration, salting effect, buffer selection, pH control, temperature, and membrane thickness.

Preferably, when the partition-membrane sheets are hollow-fiber partition membrane sheets, the sheets are stacked such that the direction of hollow fibers in one sheet runs at right angles to the hollow fibers in the adjacent sheet. However, many other angles are acceptable, for example, the relative angle can range from about 0° (notated as X-X') to about 90° (notated as X-Y').

In stacked-sleeve partition-membrane reactors, when there are two hollow-fiber partition membrane sheets, the following sheet arrangements can be constructed - X-X'-X" for the feed, sweep and phase-conversion membrane, respectively, all organized parallel to one another. Other geometries include - X-Y-X', X-Y-Y', and X-Y-Z. Those skilled in the art can configure yet other relationships.

A major advantage in these various designs, but more obviously so when using stacked-sheet partition-membrane reactors, and especially when the partition hollow-fiber partition membrane sheets are arranged in an X-Y-Z design, is that it each system parameter can be altered relatively independently of any other system parameter. Examples of independently controllable parameters include feed membrane surface area, feed gas flow velocity, liquid conversion membrane flow velocity, liquid conversion membrane thickness, sweep membrane surface area, sweep gas flow velocity, feed or sweep fiber bore diameter, local pH or temperature, surface distribution of catalyst.

### DESCRIPTION OF THE FIGURES

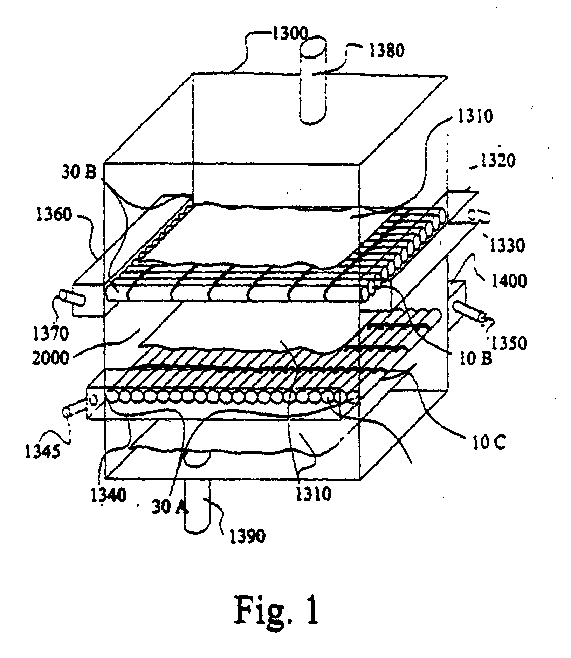

Fig. 1 depicts a stacked-sheet partition-membrane reactor exemplifying the invention for purification of a mixed gas component stream. Casing **1300** encloses the assembly wherein feed gas enters through entry port **1370** and into feed plenum **1360** to enable the feed gas to access the bore side of hollow fiber partition membrane feed sheet **30B.** Hollow fiber partition membrane feed sheet **30B** comprises an array of hollow feed fibers **10B.** The array of hollow feed fibers **10B** is bundled together using fiber **10C.** The feed gas passes through the bores of partition-membrane **30B** along which the gas of interest is extracted into the liquid conversion membrane covering spacers **1310.** The unextracted components of the feed gas, now called the retentate gas, travels within hollow feed fibers **10B** and out the bore side into retentate plenum **1320** to pass out of casing **1300** where they are collected via retentate outlet **1330.**

Preferably, the hollow fiber partition-membrane sheets are constructed from hydrophobic microporous polypropylene membranes, 300 micrometers OD and 240 micrometers ID, for example Celgard X30-240 hollow fiber arrays, which are commercially available.

The desired component of the feed gas, or permeate, passes through the shell side of hollow feed fibers **10B** and into phase-conversion membrane **2000.** Phase-conversion membrane **2000** surrounding spacer **1310** enters casing **1300** via phase-conversion membrane inlet **1380** and exits via phase-conversion membrane outlet **1390.** The partially purified permeate passes through phase-conversion membrane **2000** thereby undergoing further purification.

The permeate gas which passes through phase-conversion membrane **2000** then passes through the shell side of hollow fiber partition membrane sweep sheet **30A.** Hollow fiber partition membrane sweep sheet **30A** comprises an array of hollow sweep fibers **10A.** To facilitate the passage of the desired gas within hollow sweep fibers **10A,** a sweep gas is entered into sweep plenum **1340** via sweep inlet **1345.** Sweep plenum **1340** then passes sweep gas into the array of hollow sweep fibers **10A.** This sweep gas serves to sweep the permeate gas within hollow sweep fibers **10A** into permeate plenum **1400** for exit via permeate port **1350.**

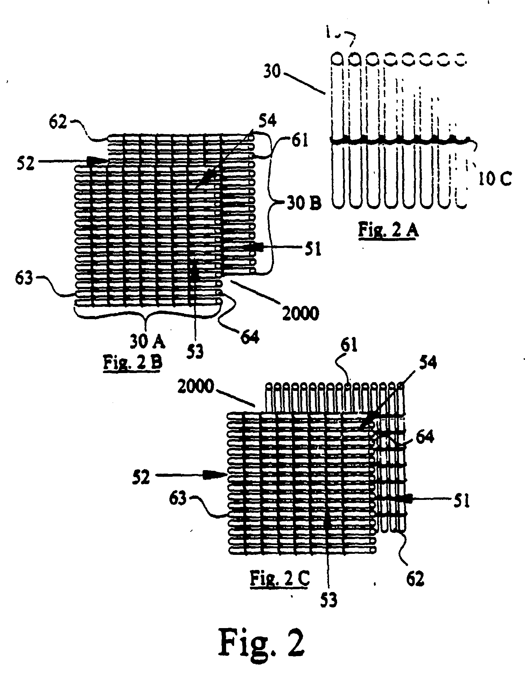

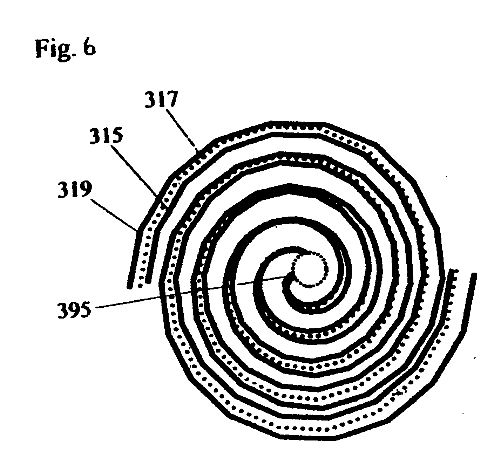

In Figure 2A, hollow fiber partition membrane sheet **30** has a substantially flat array of hollow fibers **10** bundled together using fiber **10C.** In another embodiment, hollow fibers **10** are organized in a spiral wound array, as shown in Figs. 6, 7 and 9.

Referring to Fig. 2, feed gas enters the bore side of feed sheet **30B** through feed fiber end **61** with a selected component of the feed gas passing through the shell side of feed sheet **30B.** Lean retentate gas, the undesired components of the mixed gas component stream, exits feed sheet **30B** at feed fiber end **62.** Sweep gas enters sweep sheet **30A** through sweep fiber end **63** and exits as permeate through sweep fiber end **64.** In another embodiment, a vacuum can be used in place of, or in addition to, sweep gas to facilitate movement of the permeate.

Phase-conversion membrane **2000** is a sheet-like structure positioned between the opposing shell sides of sweep sheet **30A** and feed sheet **30B.** Phase-conversion membrane **2000** is an aqueous-like membrane which can flow in a co-current direction **51** (note: large arrow head in Figures indicates direction), counter-current direction **52,** cross-current direction **53,** or orthogonal direction **54** relative to the flow of mixed gas component stream **61.**

Hollow sweep fibers **10A** and hollow feed fibers **10B** can have a relative orientation in a range of from about 0° to about 90°. Spacing between hollow sweep fibers **10A** and hollow feed fibers **10B** can have a range of from about zero (where fibers **10C** employed to knot hollow fibers **10** together serve as a spacer) to about 1 mm. Preferably, spacing is uniform. Spacing establishes the thickness of phase-conversion membrane **2000** and is critical to a uniform separation between hollow fibers **10.** Spacing can be achieved by any suitable material. One of ordinary skill in the art can readily determine the appropriate spacing material based upon the chemical makeup of phase-conversion membrane **2000.** For example, suitable spacer material can include, but is not limited to, glue lines and fabric. Preferably, spacer material is cellulosic when proteins or other organics are present in phase-conversion membrane. In another aspect, the phase separation membrane can be made of a voltage-sensitive conducting polymer or coated with a conductor such as a metal or an ion exchange resin that could allow specific ionic species to penetrate while rejecting non-ionized species or that could be used to alter local pH.

Figs. 2B shows sweep sheet **30A** and feed sheet **30B** in a parallel arrangement **35,** wherein hollow sweep fibers **10A** of sweep sheet **30A** are parallel to hollow feed fibers **10B** of sweep sheet **30B.** Alternatively, in Fig. 2C sweep sheet **30A** and feed sheet **30B** can be assembled in an orthogonal arrangement **37,** wherein hollow sweep fibers **10A** are orthogonal relative to hollow feed fibers **10B.**

In Figure 2 the phase-conversion membrane **2000** flow is illustrated at orientations in the X, Y or Z planes having angles 0° and 90° via **51, 52, 53,** and **54.** It is contemplated that other angles are acceptable. When flow is out of the plane of the fibers, i.e., in direction **54** the orientation of the phase-conversion membrane flow ranges from > 0° to 90°, preferably the angle for the Z-axis is approximately 67°. Preferably, phase-conversion membrane has a flow rate in a range of 0, i.e., diffusion-based separation, to 1200 ml/min. Preferably, the phase-conversion membrane flow rate has a velocity of about 150 ml/min.

As shown in Figure 2 and as it relates to Figures 1, 2, 3, 4, 8, 9 both the parallel and the orthogonal designs allow the introduction of an uneven number of hollow fibers for the feed 30B and the sweep **30A** to compensate for these differences by increasing surface area accordingly. In addition, it is possible to use hollow fibers of different diameter to accommodate different flow rates.

The orthogonal design offers yet a further improvement. The phase-conversion membrane **2000** flowing at right angles to the hollow fibers extracts from the feed **30B** and delivers it to the sweep **30A** in a very short distance and, if the fluid is fully unloaded, does not allow spill over to the adjacent hollow fibers. Thus, if the feed hollow fibers **30B** are relatively long and the sweep hollow fibers **30A** relatively short, though larger in number or in available surface area, the system acts as if each unit length along the feed fiber **30B** is being maximally stripped, as controlled by the relative flow rates and the relative surface areas. Thus, unlike the situation with traditional co-current or countercurrent flow, this system readily exceeds the mean concentration extraction achieved with these other approaches.

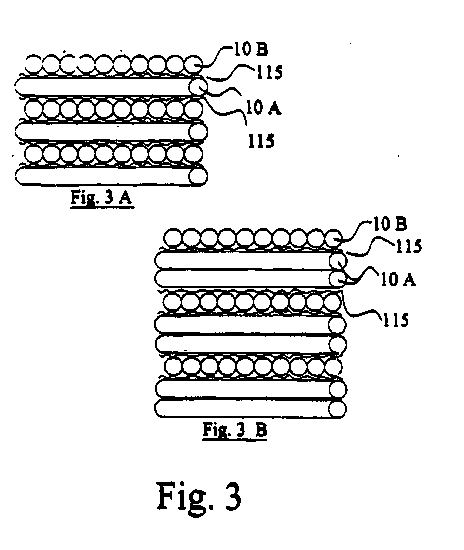

Fig. 3A depicts a hollow feed fiber **10B** to hollow sweep fiber **10A** ratio of 1:1. Fig. 3B shows a hollow feed fiber **10B** to hollow sweep fiber **10A** ratio of 1:2. Preferably, the ratio of hollow feed fibers **10B** to hollow sweep fibers **10A** can be in a range of from about 1:5 to about 5:1, depending on the relative velocity of the absorption relative to the desorption. Spacer **115** holds hollow sweep fibers **10A** and hollow feed fibers **10B** apart at a uniform distance.

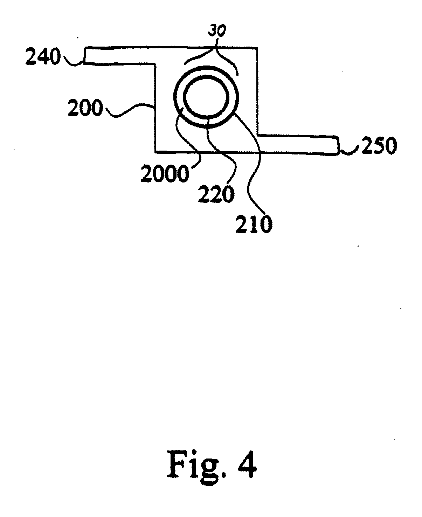

Fig. 4 illustrates a casing **200** containing hollow fiber partition membrane sheet **30** comprising a concentric array of hollow fibers **210** and **220.** Casing **200** serves as a plenum for the mixed gas component stream, or feed gas. The feed gas enters through port **240** and passes through the shell side of the outer hollow fiber **210.** Phase-conversion membrane **2000** is contained bore side to outer hollow fiber **210** and shell side to inner hollow fiber **220.** The desired gas component, or permeate, passes through phase-conversion membrane **2000** and into inner hollow fiber **220.** The permeate is swept out through the bore side of inner hollow fiber **220.** Preferably, a sweep gas or vacuum is used to move the permeate out through inner hollow fiber **220.** The retentate exits casing **200** through port **250.**

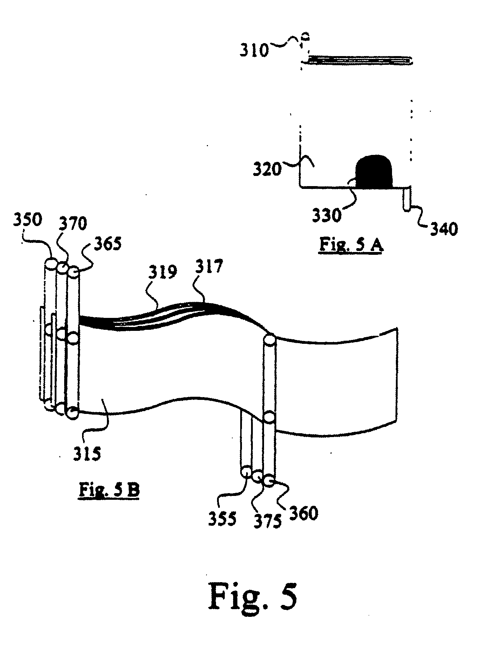

Figs. 5A and 5B illustrate a method for assembling membrane reactor bags **320** into a spiral wound reactor body. Referring to Fig. 5A, a flat feed sheet or a flat sweep sheet are folded and sealed to form membrane reactor bag **320.** Bag **320** is sealed around a partially perforated hollow fiber entry port **310** and a partially perforated hollow fiber exit port **340.** Preferably, the feed sheet and sweep sheet are held apart by spacer **330.** Preferably, the perforations are limited to the portion of hollow fiber entry port **310** and hollow fiber exit port **340** enclosed in bag **320.**

Fig. 5B illustrates an assembly of two bags **315, 319** arranged around spacing material **317.** Preferably, spacing material **317** comprises a central core mesh. Feed gas enters the assembly via port **360** and exits as the retentate via port **365.** The sweep gas enters via port **350** and exits as permeate via port **355.** Hollow tube entry port **370** and hollow tube exit port **375** allow delivery and recovery of phase-conversion membrane **2000.** The hollow fibers are delivered to the two ends of the bag and are, preferably oriented in opposite directions. Thus, one large bore hollow fiber serves as the conduit for the feed while at the opposite end the other large bore hollow fiber serves as the conduit for the retentate. Bag **320** can be held apart by phase-conversion membrane **330.**

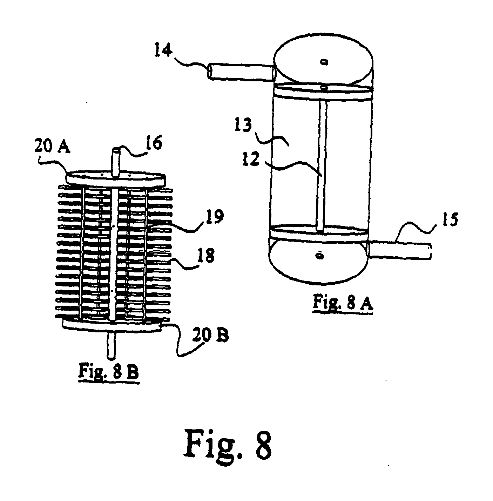

Bags **315, 319** can be arranged and rotated to form a spiral wound array, analogous to the hollow fiber array depicted in Fig. 1. In addition, it is possible to use hollow fiber mats in a similar manner provided however that the tubesets now exit via tubesheets to allow independent access to the feed and sweep fibers and to the phase-conversion membrane as is shown in Figure 8. The feed gas reactor bag **320** is adjacent to a phase-conversion membrane space **317.**

Fig. 6 provides an end on, top down view of the spiral wind membrane sleeve design for the feed/retentate **315** while the sweep/permeate **319** separated by a spacer **317** as needed. In this embodiment the phase-conversion membrane **2000** is delivered via a central perforated tube **395** so that it flows radially to be captured at the lateral margin where it exits via a port in the end cap. A similar structure can be used for hollow fibers save that there are two tubesheets **18,19,** as shown in Figure 8 at each end to allow independent access to the feed and sweep fibers **12, 15.** As illustrated in Figure 6 it is also possible to have the phase-conversion membrane flow in the axial direction from a port on the top casing to a port on the bottom casing.

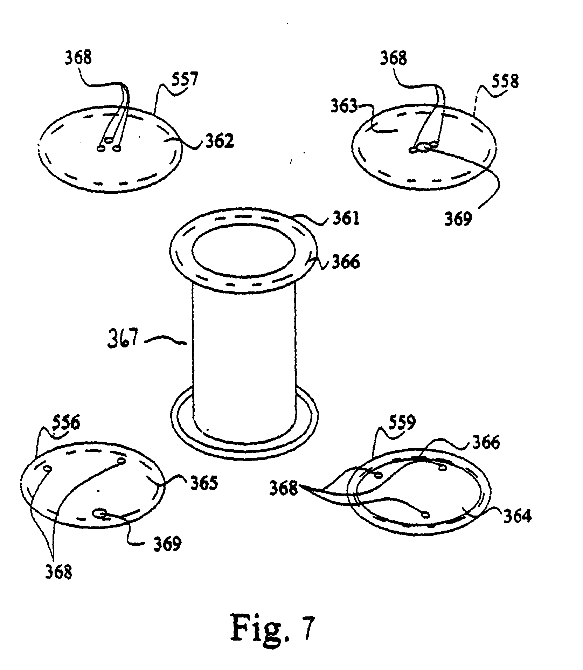

Fig. 7 shows casing **367** and end caps **362, 364** for housing the spiral wound reactor body shown in Fig. 5A, 5B and 6. Referring to Fig. 7, casing **367** is comprised of flanged tube **361** and each end of casing is capped with flat end caps **362, 364,** or alternatively **363, 365.** Each flat end cap is sealed with an O-ring **366** and perforated to accept ferrule connectors **368** to allow entry and exit of feed port **360,** retentate port **365,** sweep port **350,** permeate **355,** phase-conversion membrane delivery port **370** and phase-conversion membrane recovery port **375.** In one embodiment, the phase-conversion membrane is delivered via one of the ports labeled **368** in top end cap **557.** Tube **16** of Figure 8 exits via one of the ports labeled **368** in bottom end cap **559.** In these designs the phase-conversion membrane flows in a spiral manner if bag-like membranes are used or radially if hollow fibers are used. In the hollow fiber embodiment, the phase-conversion membrane can be collected at the periphery of plenum, **12** of Figure 8. In another embodiment, a large bore perforated pipe supplies phase-conversion membrane **2000** through port **369** of top flat end cap **558,** and exits through port **369** of the bottom flat end cap **556.** According to this embodiment, phase-conversion membrane **2000** runs axially relative to casing **367.**

Fig. 8 illustrates another embodiment providing shell **13** with plenum **12,** feed inlet **14** and retentate outlet **15.** Fig. 8B shows an interior view of shell **13** having vertical hollow feed fibers **19.** and a porous phase-conversion membrane inlet tube **16** intersected by horizontal hollow sweep fibers **18.** Horizontal hollow sweep fibers **18** and vertical hollow feed fibers **19** are enclosed within shell **13.** Partition membrane **20** accepts hollow feed fibers **19** running radially. Horizontal hollow sweep fibers **18** run in the orthogonal direction and exit shell **13** via plenum **12.**

In operation, feed gas enters shell **13** via feed inlet **14** and is fed to feed fibers **19** through upper tubesheet **20A.** Axial feed fibers **19** are gathered into a bundle and sealed into entry port **14** and the opposite ends are bundled and sealed into retentate outlet **15.** Retentate gas travels down feed fiber **19** and into lower tubesheet **20B** and out through retentate outlet **15.** The partially purified desired gas passes through the shell side of feed fibers **19** into the pores of phase-conversion membrane inlet tube **16.** Phase-conversion membrane 2000 further purifies the partially purified permeate gas with the resulting permeate being swept through and out of hollow sweep fibers **18.**

Horizontal sweep fibers **18** pass out through plenum **12.** A second plenum located on the opposite side of casing **13** permits entry horizontal sweep fibers **18** wherein the sweep fibers are collected into a bundle and sealed into a fluid supply line for The bundling and sealing of hollow fibers is well-known in the art and is described U.S. Patent Number 6,253,097, issued to Jensvold et. al.

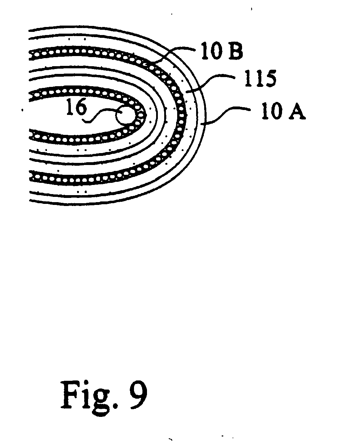

Fig. 9 illustrates the first step in assembling a hollow fiber reactor shown in Figure 8B. The feed fibers **10B** run axially while the sweep fibers **10A** run circumferentially. These mats are separated by a spacer **115** in which the phase-conversion membrane will flow. The mats wind around a central phase-conversion membrane distribution perforated tube 16.

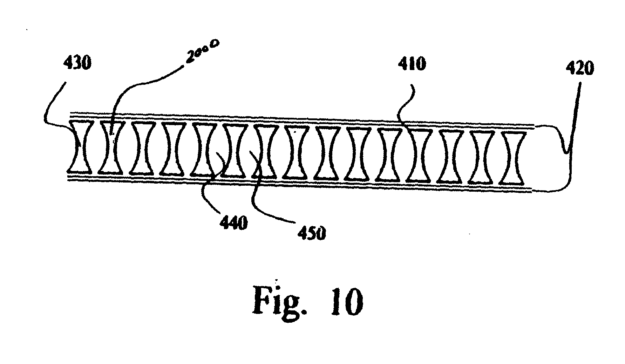

Fig. 10 shows an illustrative embodiment not falling under the embodiment as claimed where the gas and the phase-conversion membrane phase associated with the phase-conversion membrane are kept apart by virtue of surface tension. The upper and lower surface **420** are alternatively striped with hydrophilic and hydrophobic material as described by B Zhao et al. 291 SCIENCE 1023-1026 (2001), Preferably, upper and lower surfaces **420,** are spaced at a distance of less than about 2 mm. When phase-conversion membrane **430** is added in the space between upper and lower surfaces **420,** it forms a series of striped lines along the existing hydrophilic stripes **410.** Provided that the transverse pressure is not sufficient to destroy the phase-conversion membrane, it effectively separates adjacent empty zones **440, 450** which can receive gases such as the feed gas and the sweep gas or delivering permeate. The gas delivered in the feed will then partition into the phase-conversion membrane by both physical and chemical absorption processes. Similarly, a gas or its chemical equivalents will partition into the sweep phase based on such driving forces as partial pressure, temperature, and other physical forces. It is also possible to fill the space between two adjacent phase-conversion membrane films with a hydrophobic fluid into which the gases, compounds or ionic species will partition. It is possible to cause the phase-conversion membrane to flow by pressure, or temperature gradients, as described by S. Troian et al., 15 PATTERNED SURFACES, PHYS. FLUIDS 1295 (2003),
or electrochemical means. Further, it is possible to impart sufficient velocity to the gas streams to provide modest turbulence to the gas-phase-conversion membrane interface thereby facilitating absorption.

In a further embodiment it is possible to use the hydrophilic stripping material to conduct electricity thereby imparting a polarity to the phase-conversion membrane. It is further possible to delimit the hydrophilic and hydrophobic boundaries by means of perforated electrical conductors running perpendicular to the bounding surfaces. This then allows a current to run across the phase-conversion membrane film from one gas interface to the other. In these embodiments, as was the case for the membrane phase delimited embodiments described above, the operational performance is that a material is selected from the feed supply and selectively enters the phase-conversion membrane, by means of physical absorption, chemical absorption, or facilitated chemical absorption and then exits the opposite face of the phase-conversion membrane into the sweep gas or collecting phase, which can be a vacuum as the permeate. Thus, phase-conversion membrane acts to selectively extract a material from a mixture supplied at the feed side to one and enrich it in the permeate or sweep side.

Yet other membraneless designs can be organized into a full-up reactor where separation and enrichment occur in a single housing or absorber-stripper designs where separation and enrichment occur in two different housings. Each of these approaches can be embodied in rectilinear or cylindrical designs as described below.

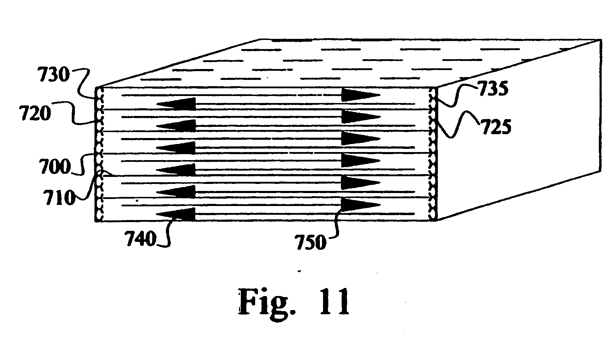

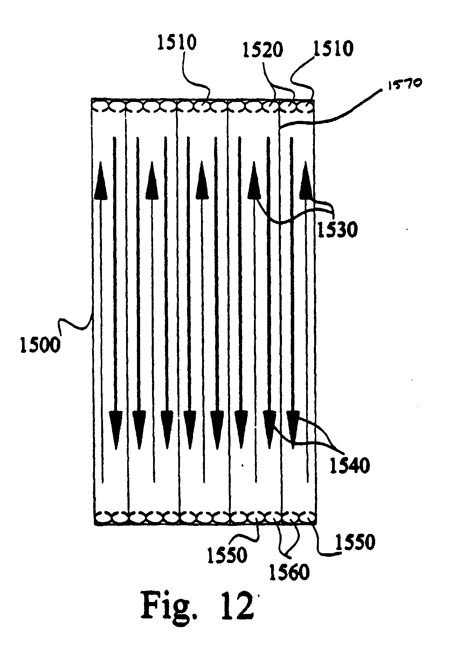

Fig. 11 illustrates a rectilinear membraneless absorber not falling under the invention as claimed. The shell **700** contains sets of feed plenums **730** and retentate plenums **735** to provide and receive, respectively, the feed gas **750.** It also contains sets of lean fluid feed plenums **725** and collection plenums **720.** The phase-conversion membrane **740** is supported on a thin surface **710** that can be electrically conducting. Such supports may be hydrophilic or hydrophobic in nature. The enriched phase-conversion membrane from the absorber is transported via piping to a similarly designed stripped where the sweep fluid extracts the separated material yielding a highly enriched stream. The stripper component looks identical and functions similarly save that the sweep gas can be water vapor and can be aided by use of a mild vacuum. The phase-conversion membrane can also be guided by a series of filaments in place of the support surface **740.** In this design both the gas and the liquid are pumped though it is likely that the apparatus will be so arranged that gravity acts on the liquid allowing it to fall uniformly. This embodiment is illustrated in Fig. 12.

Fig. 12 illustrates an absorber not falling under the invention as claimed and contained in shell **1500** where the phase-conversion membrane **1540** dispensed from plenum **1520** falls along wall **1570** to be collected in plenum **1560.** Wall **1570** can be electrically conducting. It can also be filamentous rather than solid. The feed or the sweep gas (in the stripper mode) **1530** is provided via plenum **1550** and is collected as the retentate (or permeate) in plenum **1510.** This design has the advantage of providing maximal gas-liquid contact interface, utilizes gravity as a distribution vehicle and permits more rapid extraction of the selected gas from the mixed gas stream **1530.**

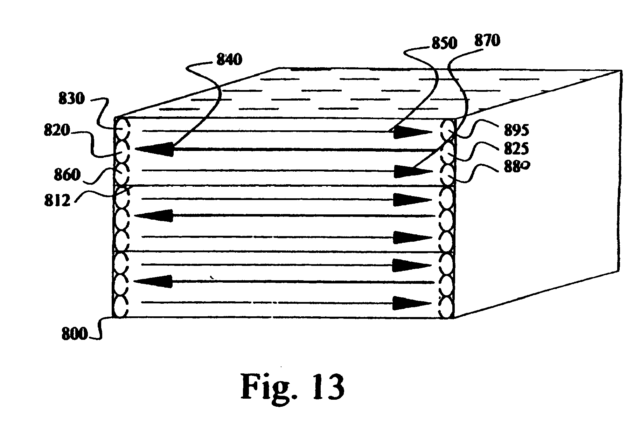

Fig. 13 illustrates a rectilinear membraneless reactor not falling under the invention as claimed and where the thin support surface of Figure 11 is replaced by a series of filaments (located within phase-conversion membrane film **840)** or, in another embodiment enjoys no physical support, i.e., the flat flow, unsupported, and is collected before it breaks into droplets or creates end areas of density. This is particularly beneficial when chemical facilitation is used, provided that the reaction time is very short, thus allowing contact time only sufficient to produce the desired reaction and to load the fluid volume to the maximal or the desired concentration. In these two embodiments the feed **850** and sweep gases **870** are supplied on both surfaces to aid in supporting the phase-conversion membrane **840.** On the lateral sides of the case **800** there are channels to help guide the flowing phase-conversion membrane. Distinct regions are separated by a film **812. 830** is the rich gas feed, **850** the rich gas stream, **895** the retentate capture, **825** the lean phase-conversion membrane feed, **840** the phase-conversion membrane fluid, **820** the uptake of the phase-conversion membrane, **860** the sweep supply, **870** the sweep stream, **880** the permeate uptake, and **800** the outer case. In this design both the gas and the liquid are pumped though it is likely that the apparatus will be so arranged that gravity acts on the liquid allowing it to fall uniformly.

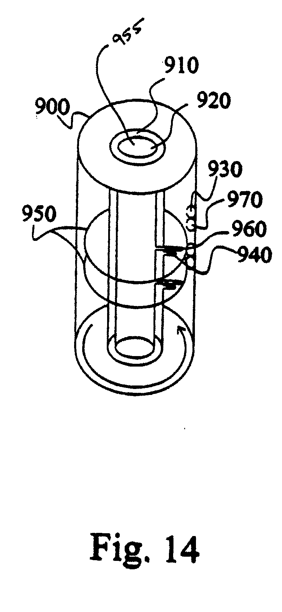

Fig. 14 illustrates a membraneless absorber not falling under the invention as claimed located in a case **900** in which the phase-conversion membrane **955** is dispensed via centrally located, rotating concentric hollow tube and supported on a thin film **950.** The core consists of two concentric tubes **910, 920** each with orifices **940, 960** that reach the surface without mixing with the fluids derived from any of the other concentric tubes. On the perimeter of the housing is found two, cylindrically oriented plenums **930, 970.** One is for delivery of gas, feed or sweep, under pressure. The other is for collection of phase-conversion membrane emitted by the rotating hollow tube core. The stripper portion of the conjoint device would be similar. In this design, unlike that of Figure 11 centrifugal force drives the fluid distribution. Gas distribution is still delivered via a pump. The discussion here relates to flat circular arrays. The gases can flow in the opposite direction to yield a co-current arrangement just as readily.

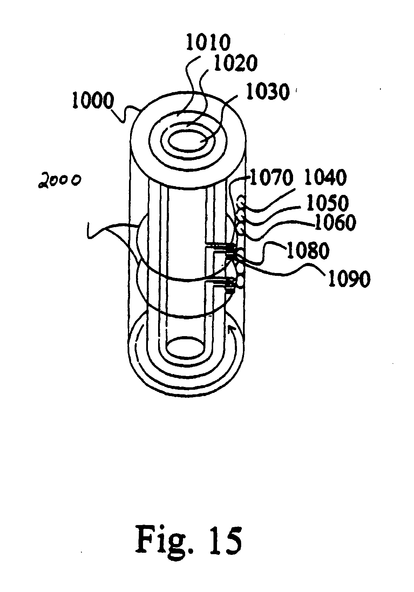

Fig. 15 illustrates a membraneless reactor not falling under the invention as claimed and in which the phase-conversion membrane is dispensed via centrally located concentric hollow tube and supported on a thin filaments or is unsupported. In this design, unlike that of Figure 12, centrifugal force drives the fluid distribution. Gas distribution may be delivered via a pump or centrifugally. This embodiment utilizes a body **1000** containing three concentric core tubes **1010, 1020, 1030** for the feed, phase-conversion membrane and sweep, or retentate, phase-conversion membrane and permeate or any other such combination or order. Each tube has rectilinear orifices that reach the surface without mixing with the fluids derived from any of the other concentric tubes **1070, 1080, 1090.** On the perimeter are three stacked plenums **1040, 1050, 1060.** In a counter-current mode the uppermost **1040** delivers feed gas that is ultimately captured via the orifices **1070** leading to the outermost and largest area core tube thereby becoming the retentate tube **1010.** The middle tube 1020 delivers the phase-conversion membrane 2000 that is distributed towards the casing perimeter by virtue of the rotation of the central tube. The phase-conversion membrane is then collected in the perimetric plenum **1050.** The third perimetric plenum **1060** provides the sweep fluid that, in turn, is collected in the centermost of the concentric tubes **1030** via penetrating non-communicating orifices **1090.** The order of the concentric tubes and the fluids delivered thereby can be altered as needed and as is known in the art. In these designs it is possible for all fluids to emanate from the three concentric hollow tubes in the core of this apparatus. It is also possible to deliver one or more gases.

In another embodiment, the reactor is configured such that extraction and enrichment occur in the same casing. Fig. 11 illustrates a rectilinear design in Fig. 11. In this case three fluid streams are in motion - feed, phase-conversion membrane and sweep.

In another embodiment, hollow fibers emanate from the central tube or the plenum and phase-conversion membrane thereby receives partial support. It should be noted that in place of plenums for collection of the fluid, especially the phase-conversion membrane, one can use a pitot tube or other applicable art.

In embodiments lacking any solid physical support for the phase-separation membrane the transmembrane pressures should be about equal to prevent breakthrough.

### 5.6 GANGING OF REACTORS

Further, we can optimize the aquatic chemistry to the specific needs of the extraction protocol. Thus, it is possible to gang reactors of this type simply by connecting the feed hollow fibers in series while the sweep hollow fibers in each optimized module operate independently.

Ultimately, one unique advantage of this design is the decoupling between the number of hollow fibers, the specific surface areas, the flow velocities for the feed, the sweep and the phase-conversion membrane, the local extraction efficiency and the fiber lengths.

It is also possible to concatenate such designs such that the retentate, the permeate or the contained phase-conversion membrane having passed through one reactor can be handed to a second with different operating properties. For example, should we wish to clean up synthesis gas and remove both carbon dioxide and methane to leave a stream heavily enriched in hydrogen we might proceed as follows: the gas feed stream first passes through an X-Y-Z orthogonal reactor using hydrophobic microporous hollow fibers capable of removing carbon dioxide by means of a salt, buffer and enzyme (carbonic anhydrase) contained phase-conversion membrane, then the retentate passes through a second reactor containing hydrophilic microporous hollow fibers and utilizing an organic solvent suitable for removal of the methane. A Kelvin design could be used wherein the transfer phase-conversion membrane is captured in pores in a polymer support of 50 nm diameter or less, the exact diameter determined by the vapor pressure of the phase-conversion membrane given the operating temperature and pressure and the respective flow rates. The product of this conjoint processing is a stream of nearly pure hydrogen.

The exemplary procedures and results described in the Examples section below provides further detailed description of the invention for the skilled technician.

### 6. EXAMPLES

The above-described methods, apparatuses and reactors have been used for the selective extraction of gases, such as carbon dioxide, from a variety of mixed gas streams including air, carbon dioxide in oxygen, respiratory gas, flue gas, landfill gas and natural gas.

In a preferred embodiment, the methods, apparatuses and reactors of the invention can extract carbon dioxide from a variety of feed gas streams. For example, for a feed stream of 5% carbon dioxide the permeate, free of argon and water vapor free gas is as much as 95% carbon dioxide. Similarly, for a 10% feed the permeate is 96% and for a 20% feed the permeate is 97% carbon dioxide.

These various features and options provide a new class of membrane reactor with, as demonstrated, exhibits amazingly high permeance while also showing very high selectivity.

### 6.1 EXAMPLE I

A reactor according to the invention was constructed with hollow-fiber partition membranes of Celgard X30-240 hollow fiber mats with the 1:1 ratio of hollow fibers in the sweep sheet to the hollow fibers in the feed sheet. These microporous hollow fibers have an OD of 300 micrometers and an ID of 240 micrometers. The porosity was 40% and the pores had an oval shape of 40nm and 100nm, respectively. Each cm width of hollow-fiber partition membrane contains 20 hollow fibers.

The hollow-fiber partition membranes were separated by a cellulosic material, a structured cotton cheesecloth known as scrim available in several thicknesses from 60 micrometers to 200 micrometers. The hollow-fiber partition membranes had an operational length of 10 cm in each the X and Y directions. The hollow-fiber partition membranes were arranged in an X-Y pattern and the phase-conversion membrane was delivered in the Z direction.

The hollow-fiber partition membranes were constructed by layering on a rubber gasket, alternate layers of cellulosic spacer, hollow-fiber partition membranes in the X direction, cellulosic spacer, hollow-fiber partition membranes in the Y direction, etc., culminating in another rubber gasket.

Each layer was coated on the edge with an epoxy such that the hollow fibers extended beyond the end of the casing. Upon curing of the epoxy, the extending hollow fibers were cut with a sharp edge to leave the bore side patent.

Another rubber gasket permitted the mounting of a plenum on each of the four sides to allow complete access to the bores of each of the hollow-fiber partition membranes in the X and Y directions.

Hollow-fiber partition membranes ranged from one feed and one sweep set to as many as 10 multiples thereof. The surface area for each the feed and sweep hollow-fiber partition membranes was 0.019m². The total cross-sectional are each of the hollow fiber tubeset bores was 4.52E-8 m² for each sheet. The volume enclosed on the shell side of the phase-conversion membrane was about 100 ml.

The phase-conversion membrane fluid flowed at a rate ranging from 0 ml/min to 150 ml/min and the residence time of the fluid was 40 seconds. The feed gas flow rate ranged from 400 to 1200 ml/min. The sweep side gas flow rate ranged from 400 to 1200 ml/min. The makeup of the feed gas was dry, carbon dioxide free air to which was added known amounts of carbon dioxide where the air and carbon dioxide were each delivered to a mixing bowl via a NIST certifiable Environics brand computerized mass flow controller.

The makeup of the sweep gas ranged from argon to water vapor, the latter facilitated by a mild vacuum applied to the permeate port where the vacuum pressure was 6 kPa abs. Gas exiting in the retentate or the permeate streams was measured by means of a regularly calibrated ABB Extrel brand residual gas analyzing mass spectrometer.

In one set of experiments, using 1% carbon dioxide, the permeance for a 200 micrometers thick phase-conversion membrane was 3.80E-9 mol/m² s Pa when the phase-conversion membrane was water, 2.96E-9 mol/m² s Pa when using 0.2M phosphate buffer at pH 7.0 and 1.28E-8 mol/m² s Pa when carbonic anhydrase, 133 micromolar was added to the 1M NaHCO₃ buffer. The selectivity vs. nitrogen was 200:1 and was 100:1 vs. oxygen for a phase-conversion membrane containing carbonic anhydrase. Comparable permeance values for a 10% carbon dioxide feed were 9.70E-9 mol/m² s Pa. The selectivity vs. nitrogen was 147:1 and 85:1 vs. oxygen. For a 15% carbon dioxide feed the permeance value was 8.67E-9 mol/m² s Pa. The selectivity vs. nitrogen was 131:1 and 78:1vs. oxygen.

### 6.2 EXAMPLE 2

This example is similar to Example 1 except the that ratio of hollow fibers in the feed sheet to the hollow fibers in the sweep sheet there was 1:2 in one instance and 1:4 in another. Hollow-fiber partition membrane spacing ranged from "0" micrometers (no cellulosic material) to 600 micrometers. The effect of increasing the hollow-fiber partition membrane ratio was negligible in terms of permeance and selectivity. The effect of increasing the spacer thickness was to decrease permeance with no change in selectivity.

## Claims

1. A method for isolating a component gas from a mixed gas stream comprising the steps of:
providing a partition membrane feed sheet (30B), a partition membrane sweep sheet (30A), and a phase conversion fluid membrane (2000) comprising an aqueous medium containing an enzyme catalyst, with the partition membrane feed sheet (30B) stacked on the partition membrane sweep sheet (30A) and a space defined between the partition membrane feed sheet (30B) and the partition membrane sweep sheet (30A) and which space includes the phase-conversion fluid membrane (2000);
contacting the mixed gas stream with the partition membrane feed sheet (30B) for separating said component gas from the mixed gas stream to yield a permeate comprising the component gas;
converting the permeate into an ionic species soluble in the aqueous medium by chemical conversion using said phase conversion fluid membrane (2000) and its catalyst to effect a second stage purification and isolation of the permeate from the mixed gas stream; and
releasing the component gas from the second phase by one of chemical reconversion and desorption, wherein the component gas is purified.

2. The method of claim 1, wherein the partition membrane feed sheet (30B) and partition membrane sweep sheet (30A) comprises one of: a hydrophilic porous material, a hydrophobic porous material, a ceramic porous material, a sintered metal porous material, carbon nanotubes, porous polypropylene, porous polyperfluroethylene, a porous hydrocarbon polymer, a porous polyamide, or a porous polycarbonate.

3. The method of claim 1, wherein the partition membrane feed sheet (30B) and the partition membrane sweep sheet (30A) comprise a plurality of hollow fibers woven together.

4. The method of claim 3, wherein the hollow fibers have an outer diameter in the range from about 100 microns to about 400 microns.

5. The method of claim 3, wherein the hollow fibers have a bore diameter in the range from about 10 microns to about 300 microns.

6. The method of claim 1, wherein the enzyme comprises carbonic anhydrase.

7. The method of claim 1, wherein the phase-conversion membrane (2000) comprises water.

8. The method of claim 1, further comprising contacting the purified component gas with a second partition membrane (30A).

9. The method of claim 3, wherein the partition membrane feed sheet (30B) comprises a plurality of hollow feed fibers (10B) and the partition membrane sweep sheet (30A) comprises a plurality of hollow sweep fibers (10A), and wherein the hollow feed fibers (10B) are oriented at an angle of about 90 degrees relative to an orientation of the hollow sweep fibers (10A).

10. A gas separation apparatus for isolating a component gas from a mixed gas stream and comprising a partition member feed sheet (30B), a partition member sweep sheet (30A), and a phase conversion fluid membrane (2000) comprising an aqueous medium containing an enzyme catalyst, with the partition membrane feed sheet (30B) being stacked on the partition membrane sweep sheet (30A) so as to define a space between the partition membrane feed sheet (30B) and the partition membrane sweep sheet (30A) and which space includes the phase conversion fluid membrane (2000); the partition membrane feed sheet (30B) being arranged for contact with the said mixed gas stream and for separating the said component gas from the mixed gas stream to yield a permeate comprising the component gas; the said phase conversion fluid membrane (2000) and its catalyst being arranged for chemically converting the permeate into an ionic species soluble in the aqueous medium so as to effect a second stage purification and isolation of the permeate from the mixed gas stream, and the apparatus being arranged for releasing the component gas from the second phase by one of chemical reconversion and desorption, wherein the component gas is purified.

## Patentansprüche

1. Verfahren zum Isolieren einer Gaskomponente aus einem gemischten Gasstrom, das Folgende Schritte umfasst:
Vorsehen einer Trennmembran-Feed-Lage (30B), einer Trennmembran-Sweep-Lage (30A) und einer Phasenumwandlungs-Fluidmembran (2000), die ein einen Enzymkatalysator enthaltendes wässriges Medium umfasst, wobei die Trennmembran-Feed-Lage (30B) auf die Trennmembran-Sweep-Lage (30A) geschichtet ist und ein Raum zwischen der Trennmembran-Feed-Lage (30B) und der Trennmembran-Sweep-Lage (30A) definiert ist und wobei dieser Raum die Phasenumwandlungs-Fluidmembran (2000) enthält; Berühren des gemischten Gasstroms mit der Trennmembran-Feed-Lage (30B), um die genannte Gaskomponente von dem gemischten Gasstrom zu trennen, um ein die Gaskomponente umfassendes Permeat zu ergeben;
Umwandeln des Permeats in eine ionische Spezies, die in dem wässerigen Medium löslich ist, durch chemische Umwandlung unter Verwendung der genannten Phasenumwandlungs-Fluidmembran (2000) und ihres Katalysators, um eine zweite Stufe der Reinigung und Isolierung des Permeats aus dem gemischten Gasstrom zu bewirken; und
Lösen der Csaskomponente aus der zweiten Phase durch chemische Rückwandlung oder Desorption, wobei die Gaskomponente gereinigt wird.

2. Verfahren nach Anspruch 1, wobei die Trennmembran-Feed-Lage (30B) und Trennmembran-Sweep-Lage (30A) eines der Folgenden umfassen: ein hydrophiles poröses Material, ein hydrophobes poröses Material, ein keramisches poröses Material, ein gesintertes poröses Metallmaterial, Kohlenstoff-Nanoröhren, poröses Polypropylen, poröses Polypemuroethylen, ein poröses Kohlenwasserstoffpolymer, ein poröses Polyamid oder ein poröses Polvearbonat.

3. Verfahren nach Anspruch 1, wobei die Trennmembran-Feed-Lage (30B) und die Trennmembran-Sweep-Lage (30A) eine Vielzahl von zusammengewebten hohlen Fasern umfassen.

4. Verfahren nach Anspruch 3, wobei die hohlen Fasern einen Außendurchmesser im Bereich von ungefähr 100 Mikron bis ungefähr 400 Mikron haben.

5. Verfahren nach Anspruch 3, wobei die hohlen Fasern einen Bohrungsdurchmesser im Bereich von ungefähr 10 Mikron bis ungefähr 300 Mikron haben.

6. Verfahren nach Anspruch 1, wobei das Enzym carbonische Anhydrase umfasst.

7. Verfahren nach Anspruch 1, wobei die Phasenumwandlungsmembran (2000) Wasser umfasst.

8. Verfahren nach Anspruch 1, weiter umfassend das Berühren der gereinigten Gaskomponente mit einer zweiten Trennmembran (30A).

9. Verfahren nach Anspruch 3, wobei die Trennmembran-Feed-Lage (30B) eine Vielzahl hohler Feed-Fasern (10B) umfasst und die Trennmembran-Sweep-Lage (30A) eine Vielzahl hohler Sweep-Fasern (10A) umfasst und wobei die hohlen Feed-Fasern (10B) in einem Winkel von ungefähr 90 Grad gegenüber einer Ausrichtung der hohlen Sweep-Fasern (10A) ausgerichtet sind.

10. Gastrennvorrichtung zum Isolieren einer Gaskomponente aus einem gemischten Gasstrom und umfassend eine Trennelement-Feed-Lage (30B), eine Trennelement-Sweep-Lage (30A) und eine Phasenumwandlunes-Fluidmembran (2000), die ein einen Enzymkatalysator enthaltendes wässriges Medium umfasst, wobei die Trennmembran-Feed-Lage (30B) auf die Trennmembran-Sweep-Lage (30A) geschichtet ist, um einen Raum zwischen der Trennmembran-Feed-Lage (30B) und der Trennmembran-Sweep-Lage (30A) zu definieren und wobei der Raum die Phasenumwandlungs-Fluidmembran (2000) enthält; wobei die Trennmembran-Feed-Lage (30B) für die Berührung mit dem genannten gemischten Gasstrom und zum Trennen der genannten Gaskomponente aus dem gemischten Gasstrom angeordnet ist, um ein die Gaskomponente umfassendes Permeat zu ergeben; wobei die genannte Phasenumwandlungs-Fluidmembran (2000) und ihr Katalysator dazu angeordet sind, das Permeat chemisch in eine ionische Spezies umzuwandln, die in dem wässrigen Medium löslich ist, um eine zweite Stufe der Reinigung und Isolierung des Permeats aus dem gemischten Gasstrom zu bewirken und wobei die Vorrichtung dazu angeordnet ist, die Gaskomponente durch chemische Rückwandlung oder Desorption aus der zweiten Phase zu lösen, wobei die Gaskomponente gereinigt wird.

## Revendications

1. Procédé permettant d'isoler un composant gazeux se trouvant dans un courant gazeux mixte comportant les étapes consistant à :
mettre en oeuvre une feuille d'alimentation de membrane de partage (30B), une feuille de balayage de membrane de partage (30A) et une membrane fluide de conversion de phase (2000) comportant un milieu aqueux contenant un catalyseur enzymatique, la feuille d'alimentation de membrane de partage (30B) étant empilée sur la feuille de balayage de membrane de partage (30A) et un espace étant défini entre la feuille d'alimentation de membrane de partage (30B) et la feuille de balayage de membrane de partage (30A), espace qui comprend la membrane fluide de conversion de phase (2000) ;
mettre le courant gazeux mixte en contact avec la feuille d'alimentation de membrane de partage (30B) pour séparer ledit composant gazeux se trouvant dans le courant gazeux mixte pour produire un perméat comportant le composant gazeux ;
convertir le perméat en une espèce ionique soluble dans le milieu aqueux par conversion chimique en utilisant ladite membrane fluide de conversion de phase (2000) et son catalyseur pour réaliser un deuxième étage d'épuration et une isolation du perméat se trouvant dans le courant gazeux mixte ; et
libérer le composant gazeux de la deuxième phase par l'une d'une reconversion chimique et d'une désorption chimique, dans lequel le composant gazeux est épuré.

2. Procédé selon la revendication 1, dans lequel la feuille d'alimentation de membrane de partage (30B) et la feuille de balayage de membrane de partage (30A) comportent l'un parmi : un matériau poreux hydrophile, un matériau poreux hydrophobe, un matériau poreux céramique, un matériau poreux en métal fritté, des nanotubes de carbone, du polypropylène poreux, du polyperfluoroéthylène poreux, un hydrocarbure polymérique poreux, un polyamide poreux, ou un polycarbonate poreux.

3. Procédé selon la revendication 1, dans lequel la feuille d'alimentation de membrane de partage (30B) et la de balayage de de partage (30.N) une pluralité de fibres creuses tissées ensemble.

4. Procédé selon la revendication 3, dans lequel les fibres creuses ont un diamètre extérieur de l'ordre d'environ 100 microns à environ 400 microns.

5. Procédé selon la revendication 3, dans lequel les fibres creuses ont un diamètre d'alésage de l'ordre d'environ 10 microns à environ 300 microns.

6. Procédé selon la revendication 1, dans lequel l'enzyme comporte de l'anhydrase carbonique.

7. Procédé selon la revendication 1, dans lequel la membrane de conversion de phase (2000) comporte de l'eau.

8. Procédé selon la revendication 1, comportant par ailleurs la mise en contact du composant gazeux épuré avec une deuxième membrane de partage (30A).

9. Procédé selon la revendication 3, dans lequel la feuille d'alimentation de membrane de partage (30B) comporte une pluralité de fibres d'alimentation creuses (10B) et la feuille de balayage de membrane de partage (30A) comporte une pluralité de fibres de balayage creuses (10A), et dans lequel les fibres d'alimentation creuses (10B) sont orientées selon un angle d'environ 90 degrés par rapport à une orientation des fibres de balayage creuses (10A).

10. Appareil de séparation de gaz permettant d'isoler un composant gazeux se trouvant dans un courant gazeux mixte et comportant une feuille d'alimentation d'élément de partage (30B), une feuille de balayage d'élément de partage (30A) et une membrane fluide de conversion de phase (2000) comportant un milieu aqueux contenant un catalyseur enzymatique, la feuille d'alimentation de membrane de partage (30B) étant empilée sur la feuille de balayage de membrane de partage (30A) de manière à définir un espace entre la feuille d'alimentation de membrane de partage (30B) et la feuille de balayage de membrane de partage (30A), espace qui comprend la membrane fluide de conversion de phase (2000); à feuille d'alimentation de de partage (30B) étant disposée à des de mise en contact avec ledit courant gazeux mixte et à des de séparation dudit composant gazeux se trouvant dans le courant gazeux mixte pour produire un perméat comportant le composant gazeux; ladite membrane fluide de conversion de phase, (2000) et son catalyseur disposées pour convertir chimiquement le perméat en une espèce ionique soluble dans le milieu aqueux de manière à réaliser un deuxième étage d'épuration et une isolation du perméat se trouvant dans le courant gazeux mixte, et l'appareil étant disposé pour libérer le composant gazeux de la deuxième phase par l'une d'une reconversion chimique et d'une désorption chimique, dans lequel le composant gazeux est épuré.
